# EUROPEAN PATENT APPLICATION

(11) **EP 1 594 071 A2**
(43) Date of publication of application: **09.11.2005**
(21) Application number: 05103730.7
(22) Date of filing: 04.05.2005
(51) Int. Cl.: G06F 17/30

(54) **Method and system for synchronizing data between electronic devices**

(30) Priority: 05.05.2004 US 839299
(71) Applicant: MICROSOFT CORPORATION, Redmond, WA 98052 (US)
(72) Inventor: Rajeev, Byrisetty, Redmond, WA Washington 98052 (US); Walters, Kenneth Ralph, Redmond, WA Washington 98052 (US); Yang, Zhidong, Redmond, WA Washington 98052 (US)
(74) Representative: Zimmer, Franz-Josef

(57) **Abstract**

Electronic devices often need to synchronize data themselves. A synchronization engine includes a database that supports the tracking of changed data, filtering, and recovery synchronization. Data changes that occur in the electronic devices are tracked for data synchronization. Data may be filtered by the database according to predetermined criteria such as a date range, state of the devices, and categories of items such as newly added items, modified items, or deleted items. Recovery synchronization allows for the recovery of data lost due to a communication interruption during the synchronization process.

## Description

### Background of the Invention

Data synchronization increases the mobility of computing devices by allowing data changes on one electronic device to be implemented on another electronic device. For example, a calendar application may be modified on a mobile device. The modifications may be replicated on the same calendar application stored on a personal computer using data synchronization such that the user need not manually update the data.

A synchronization file associated with an application manages the state of the data associated with the file. For example, a computing device may have an e-mail application inbox that includes a large number of items. The items may be synchronized by tracking information associated with all the items or a subset of the items. The synchronization file may store information related to the subset of items but the device may not be aware of the state of the remaining items. Thus, modifications to the remaining items may not be updated on the device.

A user may desire to filter the data according to predetermined criteria. For example, a user may request all e-mail messages received over a period of time. The synchronization file would then inspect every item in the e-mail application to determine whether that item was received during the given period. The filtering process is slow and inefficient because every item is checked without an index on the filtered properties to determine whether the item is included within the filter parameters.

### Summary of the Invention

The present invention is directed toward a method and system for synchronizing data between electronic devices. A synchronization engine includes a database that supports the tracking of changed data, filtering, and recovery synchronization. Data changes that occur in the electronic devices are tracked for data synchronization. Data may be filtered by the database according to predetermined criteria such as a date range, state of the devices, and categories of items such as newly added items, modified items, or deleted items. Recovery synchronization allows for the recovery of data lost due to a communication interruption during the synchronization process.

According to one aspect of the invention, a computer-implemented method synchronizes data between a first electronic device and a second electronic device. A database is selected that contains metadata to be updated between the first electronic device and the second electronic device. A query is sent from the first electronic device to the second electronic device such that a list of items of the metadata to be updated is created by the second electronic device. The list of items reflects information associated with the metadata that is present on the second electronic device but not on the first electronic device. The information to be updated is sent from the first electronic device to the second electronic device.

According to another aspect of the invention, a system synchronizes data between a first electronic device and a second electronic device. The system comprises a database coupled to the first and second electronic devices, and a synchronization engine coupled to the database. Changes to metadata on the first and second electronic devices are implemented in the database. The synchronization engine is configured to send a query to the second electronic device such that a list of items of the metadata to be updated is created by the second electronic device. The list reflects information associated with the metadata that is present on the second electronic device but not on the first electronic device. The synchronization engine is further configured to send the information to be updated to the second electronic device.

### Brief Description of the Drawings

FIGURE 1 illustrates a computing device that may be used according to an example embodiment of the present invention.
FIGURE 2 is a functional block diagram illustrating a system for synchronizing data between electronic devices, in accordance with the present invention.
FIGURE 3 is an operational flow diagram illustrating a process for synchronizing data between electronic devices, in accordance with the present invention.

### Detailed Description of the Preferred Embodiment

Briefly stated, a method and system for synchronizing data between electronic devices are described. A synchronization engine includes a database that supports the tracking of changed data, data filtering, and recovery synchronization. Data changes that occur in the electronic devices are tracked for data synchronization. Data may be filtered by the database according to predetermined criteria such as a date range, state of the devices, and categories of items such as newly added items, modified items, or deleted items. Recovery synchronization allows for the recovery of data lost due to a communication interruption during the synchronization process.

### Illustrative Operating Environment

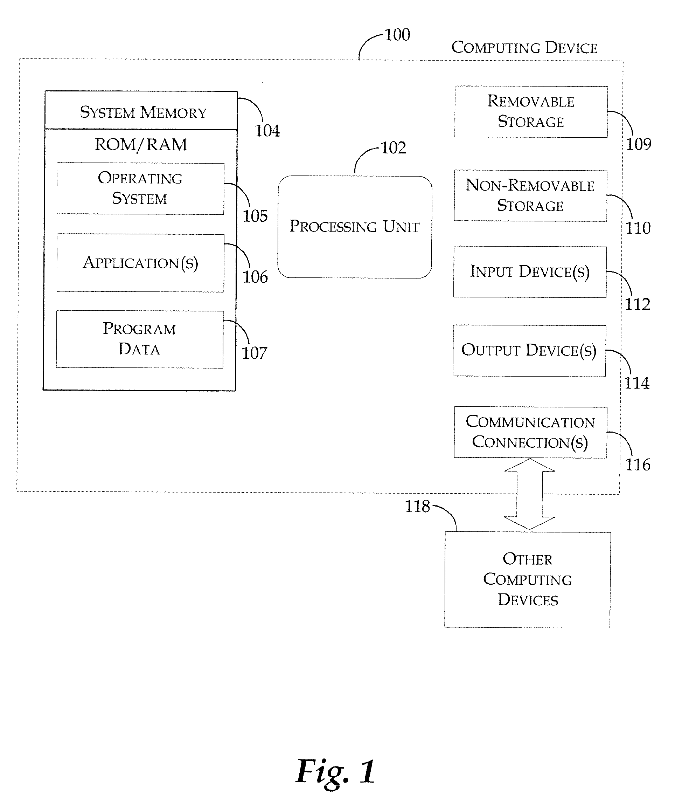

With reference to FIGURE 1, one example system for implementing the invention includes a computing device, such as computing device 100. Computing device 100 may be configured as a client, a server, a mobile device, or any other computing device that interacts with data in a network based collaboration system. In a very basic configuration, computing device 100 typically includes at least one processing unit 102 and system memory 104. Depending on the exact configuration and type of computing device, system memory 104 may be volatile (such as RAM), non-volatile (such as ROM, flash memory, etc.) or some combination of the two. System memory 104 typically includes an operating system 105, one or more applications 106, and may include program data 107. The present invention, which is described in detail below, is implemented within applications 106.

Computing device 100 may have additional features or functionality. For example, computing device 100 may also include additional data storage devices (removable and/or non-removable) such as, for example, magnetic disks, optical disks, or tape. Such additional storage is illustrated in FIGURE 1 by removable storage 109 and non-removable storage 110. Computer storage media may include volatile and nonvolatile, removable and non-removable media implemented in any method or technology for storage of information, such as computer readable instructions, data structures, program modules, or other data. System memory 104, removable storage 109 and non-removable storage 110 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 100. Any such computer storage media may be part of device 100. Computing device 100 may also have input device(s) 112 such as keyboard, mouse, pen, voice input device, touch input device, etc. Output device(s) 114 such as a display, speakers, printer, etc. may also be included.

Computing device 100 also contains communication connections 116 that allow the device to communicate with other computing devices 118, such as over a network. Networks include local area networks and wide area networks, as well as other large scale networks including, but not limited to, intranets and extranets. Communication connection 116 is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

### Synchronizing Data Between Electronic Devices

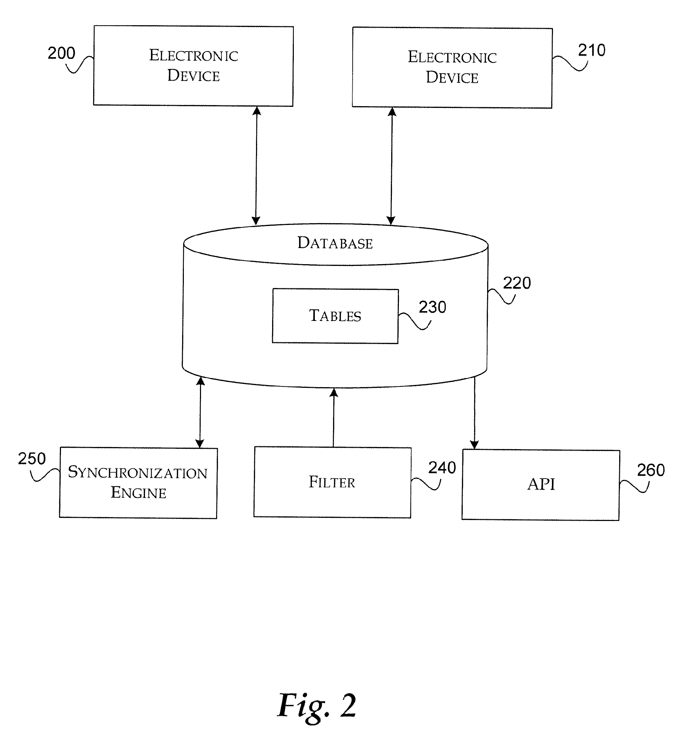

FIGURE 2 is a functional block diagram illustrating a system for synchronizing data between electronic devices, in accordance with the present invention. The system includes electronic devices 200, 210, database 220, filter 240, synchronization engine 250 and application program interface (API) 260. Electronic devices 200, 210 may be any device that electronically communicates information. For example, electronic devices 200, 210 can be a computing device as described above in reference to FIGURE 1.

Database 220 includes information associated with a file. In one embodiment, database 220 is available in a memory component of electronic devices 200 and/or 210. In another embodiment, database 220 is stored on a server that is external to electronic devices 200, 210. In another embodiment, database 220 is associated with an internal domain such as a company intranet.

Database 220 includes tables 230 that describe data objects associated with an application. The table schema is defined in metadata stored in database 220. Database 220 may also include a list of folders. For example, folders associated with an e-mail application may include inbox, sent items, and deleted items. Tables 230 may include information associated with each folder and information associated with each item in a folder. In one embodiment, one table may point to another table associated with a parent folder.

Database 220 tracks items associated with a device application including any changes that occur to the items. Database 220 maintains the status of the items including information about which electronic device the items are associated with such that database 220 drives the synchronization process. When data associated with electronic device 200 (or 210) is changed, the change is also implemented in database 220. Database 220 then notifies electronic device 210 (or 200) of changes to the stored data such that electronic device 210 (or 200) retrieves the data from database 220 and the data is updated on electronic device 210 (or 200). An application associated with the data continually informs electronic devices 200, 210 of changes that occur to the data.

In one example, a data change may include a new e-mail message arriving at an inbox, a new calendar item being entered, or a new meeting request being received. In another example, a data change may include the creation of a new item in electronic device 200 (or 210). In a further example, a data change may include a folder name change in database 220.

Electronic devices 200, 210 may request the retrieval of specific items from database 220 using filter 240. The items may be categorized according to which changes have been made to the items. For example, categories of changed items include newly added items, modified items, soft deleted items and deleted items. Soft deleted items refer to filtered items that were once associated with electronic device 200 (or 210) but the items are no longer within the specified filter range. In one example, filter 240 may be set to provide all items received in an inbox folder associated with an e-mail application within a two day period. After an item ages beyond two days it may be considered soft deleted.

Filter 240 allows electronic devices 200, 210 to retrieve the requested information from tables 230. When electronic devices 200, 210 synchronize with a folder associated with the requested items, the settings associated with electronic devices 200, 210 are determined such that only the requested items that have been changed since the previous synchronization are sent to electronic devices 200, 210. In one embodiment, data changes corresponding to added, modified, soft deleted, and deleted items sent to database 220 from a device requesting the data changes are not returned to the requesting device during a subsequent synchronization.

Filter 240 is implemented as queries that access tables 230 in database 220. Filter 240 provides indices for the requested items to expedite the search for changed items. Thus, every item in database 220 need not be searched to determine if the item falls within the parameters set by filter 240. For example, a user may request all calendar items sent by the same person who sent a given meeting request. Filter 240 might then only search tables 230 in database 220 for calendar items that are associated with the person. The requested items are then returned to the requesting electronic device.

API 260 exposes an interface associated with an application. In one embodiment, API 260 is a messaging application that exposes an interface associated with an e-mail application.

Synchronization engine 250 controls database 220. Synchronization engine 250 reconciles database 250 with API 260 such that each time synchronization engine 250 is activated synchronization engine 250 communicates with API 260 and enumerates all items. Item enumeration ensures that every item in API 260 is also in database 220 such that a one-to-one correspondence exists between database 220 and API 260. In one embodiment, the relationship between API 260 and database 220 may be restricted such that every item is not stored in every folder in API 260. Items may be stored only in the folder associated with the application being synchronized because the device is synchronizing data associated with one application at a time.

In one example, synchronization engine 250 receives notifications that an item in a given folder has changed or has moved to a different folder within electronic device 200. Database 220 is updated to reflect the changes. Synchronization engine 250 triggers a call to electronic device 210 such that electronic device 210 retrieves the changed data from database 220. When electronic device 210 requests the changed data from database 220, profile information associated with the corresponding folder may also be retrieved from database 220. The profile information includes information about previous synchronization attempts such that it may be determined if a request is being repeated. The profile information is also used to determine if recovery is necessary.

Synchronization engine 220 inspects the results of a previous filtering process to determine the data stored on electronic device 200. A new filtering process computes a list of items on electronic device 200 that have been added, modified, soft deleted or deleted. Changes may be made to the same item at both electronic devices 200, 210 such that a different version or the item exists at each electronic device. For example, the start or end time associated with an appointment item is changed at electronic device 200 and is also changed to a different time at electronic device 210. Thus, a conflict is created between the data stored at electronic device 200 and the data stored at electronic device 210. Any such conflicts are resolved during the synchronization process.

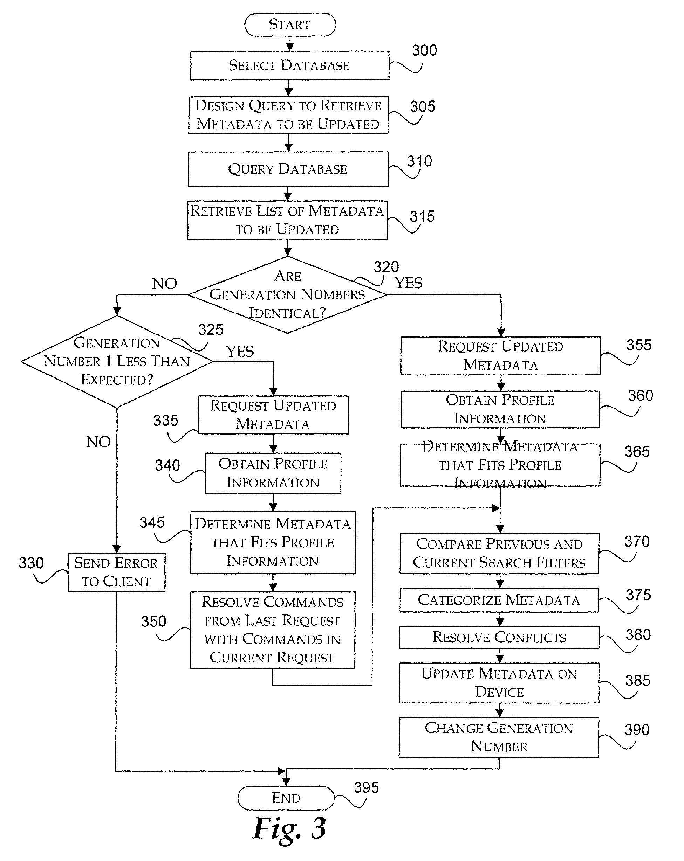

FIGURE 3 is an operational flow diagram illustrating a process for synchronizing data between a modified electronic device and a requesting electronic device, in accordance with the present invention. The modified electronic device includes metadata that has been changed. The requesting electronic device requests the changed metadata from a database associated with the devices such that the metadata is updated on the requesting device. Metadata may include both data and descriptions of data.

The process begins at a start block where a synchronization process is initiated when metadata is changed on the modified electronic device and stored on the associated database. Moving to block 300, the requesting electronic device selects the database containing the changed metadata. The requesting electronic device may be informed of the change to the database by a synchronization engine. The database may be internal or external to the requesting electronic device.

Proceeding to block 305, queries are designed to retrieve the changed metadata from the database. Each query is specifically designed for the type of changed metadata such that only the requested metadata that has been changed since the last synchronization is retrieved. Advancing to block 310, the requesting electronic device queries the database for the updated metadata.

Transitioning to block 315, the database retrieves a list of the changed metadata from the modified electronic device. A unique identifier associated with the changed data may also be sent to the database. In one embodiment, the unique identifier is a change number that is updated each time the data is changed (i.e., the reference to the unique identifier is removed).

Continuing to decision block 320, a determination is made whether a generation number associated with metadata on the list of metadata to be updated is identical to a generation number associated with the changed metadata. Metadata is assigned a generation number when the metadata is initially created, transferred, modified or otherwise first encountered by the synchronization engine. The generation number is used to determine whether the metadata has changed since the last synchronization. If a generation number is the same as the last time synchronization was performed, then some metadata requires updating. In one embodiment, each type of changed metadata is associated with a separate generation number. If the generation numbers are identical, processing proceeds to block 355. If the generation numbers are not identical, processing proceeds to decision block 325.

Continuing to decision block 325, a determination is made whether the generation number is one less than expected. If the generation number is one less than expected, processing continues at block 335. If the generation number is not one less than expected, processing continues at block 330 where a synchronization error is sent to the client. Processing then terminates at end block 395.

Advancing to block 335, the requesting electronic device requests the metadata to be updated from the database such that the requesting device may process the query. Transitioning to block 340, the request is satisfied by obtaining profile information associated with the updated metadata. The profile information may include information about previous synchronization attempts such that it may be determined if an update request is being repeated. Moving to block 345, the metadata that matches the profile information is determined. Continuing to block 350, commands persisting from a last update request are resolved with commands from a current update request. Processing proceeds to block 370.

Advancing to block 355, the requesting electronic device requests the metadata to be updated from the database such that the requesting device may process the query. Transitioning to block 360, the request is satisfied by obtaining profile information associated with the updated metadata. Moving to block 365, the metadata that matches the profile information is determined.

Proceeding to block 370, a previous search filter is compared to a current search filter for the metadata that matches the profile information. Continuing to block 375, the metadata is categorized. In one embodiment, the metadata is separated into the following categories: newly added items, modified items, soft deleted items and deleted items.

Moving to block 380, conflict resolution is performed to resolve any conflicts between different versions of the same metadata items stored on different electronic devices. Each metadata item that is to be sent to the requesting electronic device is compared to a list of metadata items that the requesting electronic device previously to resolve any conflicts between the metadata items.

Advancing to block 385, a final list of changed metadata is generated and forwarded to the requesting electronic device such that the changed metadata is updated on the requesting electronic device. Updating the metadata may include creating new metadata, deleting metadata, or modifying metadata such as by moving the metadata to a different folder. Continuing to block 390, the generation number associated with the metadata is changed. Processing then terminates at end block 395.

In one embodiment, a backup of the data associated with a most recent update request is stored such that the data may be recovered if communication between electronic devices is interrupted during synchronization. Data may be lost due to the electronic device being disconnected from the network, or due to a system failure.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A computer-implemented method for synchronizing data between a first electronic device and a second electronic device, comprising:
selecting a database containing metadata to be updated between the first electronic device and the second electronic device;
in response to the type of selected database, sending a query from the first electronic device to the second electronic device such that a list of items of the metadata to be updated is created by the second electronic device, wherein the list reflects information associated with the metadata that is present on the second electronic device but not on the first electronic device; and
sending the information to be updated from the first electronic device to the second electronic device.

2. The computer-implemented method of Claim 1, further comprising designing the query specifically for the type of metadata to be updated.

3. The computer-implemented method of Claim 1, wherein the second electronic device queries the database for the updated metadata.

4. The computer-implemented method of Claim 1, further comprising retrieving the list of items of the metadata to be updated from the database.

5. The computer-implemented method of Claim 1, further comprising comparing generation numbers associated with changed metadata on the first electronic device and the metadata to be updated on the second electronic device to determine the information associated with the metadata that is present on the second electronic but not on the first electronic device.

6. The computer-implemented method of Claim 1, further comprising obtaining profile information associated with the metadata to be updated such that a repeated request to update metadata is determined.

7. The computer-implemented method of Claim 1, further comprising categorizing the metadata by type.

8. The computer-implemented method of Claim 1, further comprising resolving conflicts between metadata stored on the first electronic device and the second electronic device such that the same version of the metadata exists on the first electronic device and the second electronic device.

9. A system for synchronizing data between a first electronic device and a second electronic device, comprising:
a database coupled to the first and second electronic devices, wherein changes to metadata on the first and second electronic devices are implemented in the database; and
a synchronization engine coupled to the database, the synchronization engine being configured to:
send a query to the second electronic device such that a list of items of the metadata to be updated is created by the second electronic device, wherein the list reflects information associated with the metadata that is present on the second electronic device but not on the first electronic device; and
send the information to be updated to the second electronic device.

10. The system of Claim 9, wherein the database is available in a memory component of at least one of a group consisting of the first electronic device and the second electronic device.

11. The system of Claim 9, wherein the information to be updated is retrieved from the database.

12. The system of Claim 9, further comprising a filter coupled to the database such that specific information is retrievable from the database, wherein the specific information includes categories of information based on which changes have been made to the information.

13. The system of Claim 12, wherein the categories of information include newly added information, modified information, soft deleted information, and deleted information.

14. The system of Claim 9, wherein the synchronization engine reconciles the database with an application program interface such that each time the synchronization engine is activated the synchronization engine communicates with the application program interface and enumerates the information.

15. The system of Claim 14, wherein information enumeration ensures that each item in the application program interface is also included in the database.

16. The system of Claim 9, wherein the database comprises profile information that is used to determine whether a request to update data is repeated.

17. The system of Claim 9, wherein the database comprises profile information that is used to determine whether recovery synchronization is necessary.

18. The system of claim 17, wherein recovery synchronization comprises storing a backup of the metadata associated with a most recent information update request such that the metadata is recoverable when synchronization is disrupted.

19. A computer-readable medium having computer-executable instructions for synchronizing data between a first electronic device and a second electronic device, comprising:
selecting a database containing metadata to be updated between the first electronic device and the second electronic device;
in response to the type of selected database, sending a query specifically designed for the type of metadata to be updated from the first electronic device to the second electronic device such that a list of items of the metadata to be updated is created by the second electronic device, wherein the list reflects information that is present on the second electronic but not on the first electronic device; and
sending information associated with the metadata to be updated from the first electronic device to the second electronic device.

20. The computer-readable medium of Claim 19, further comprising comparing generation numbers associated with changed metadata on the first electronic device and the metadata to be updated on the second electronic device to determine the information associated with the metadata that is present on the second electronic but not on the first electronic device.

21. A system for synchronizing data between a first electronic device and a second electronic device, comprising:
means for selecting a database containing metadata to be updated between the first electronic device and the second electronic device;
means for sending a query from the first electronic device to the second electronic device such that a list of items of the metadata to be updated is created by the second electronic device, wherein the list reflects information associated with the metadata that is present on the second electronic device but not on the first electronic device; and
means for sending the information to be updated from the first electronic device to the second electronic device.
